# EUROPEAN PATENT APPLICATION

(11) **EP 2 452 650 A1**
(43) Date of publication of application: **16.05.2012**
(21) Application number: 10191167.5
(22) Date of filing: 15.11.2010
(51) Int. Cl.: A61C 13/00

(54) **Dental prosthetic framework and a method to produce the same**

(71) Applicant: Implantix AB, 428 34 Kållered (SE)
(72) Inventor: Lindberg, Anders, 296 38 Åhus (SE); Kazemi, Reza, 291 35 Kristianstad (SE); Rundberg, Mats, 291 36 Kristianstad (SE); Nilsson, Håkan, 291 92 Kristianstad (SE); Szerzö Lundin, Ildiko, 295 91 Bromölla (SE); Abdi Azandaryani, Nahid, 291 35 Kristianstad (SE); Alisehovic, Amela, 291 32 Kristianstad (SE); Hansson, Magnus, 291 34 Kristianstad (SE); Max, Christina, 241 37 Eslöv (SE)
(74) Representative: Larsson, Malin

(57) **Abstract**

Method for the production of a dental prosthetic framework with at least one through channel (7) comprising the following steps: determining the position of an inlet opening (13) of said inlet portion, said inlet opening discharging on a surface corresponding to an occlusal surface, a lingual surface or a palatinal surface of an artificial tooth (5); determining the position of an outlet opening and the axial direction of said outlet portion (12), such that the outlet portion is capable of cooperating with an implant (3) arranged in a jawbone of a patient; determining, for said at least one through channel in the framework, a longitudinal extension between said inlet and outlet portions; and forming said framework by selectively consolidating layers of a powder material on top of each other using thermal energy, whereby said at least one through channel is formed during said step. The invention also relates to such framework.

## Description

### Technical field

The present invention generally relates to a method for the production of a dental prosthetic framework with at least one through channel. The invention also relates to such dental prosthetic framework.

### Background of the invention

Dental implant systems are used to restore a dental function. Generally, a dental implant system comprises at least one implant to be attached to the jawbone and a superstructure to be attached to the implants, which superstructure can be divided into a framework and at least one artificial tooth supported by said framework. The implants are attached to the jawbone by a surgical operation.

The position and axial direction of the implants is determined theoretically based on parameters such as the original teeth configuration, the jawbone, the size of the superstructure and which tooth/teeth to replace. The practical work involving mounting of the implants is a surgical operation where the surgeon is faced with the actual bone structure and swelling and bleeding due to the incision, making the accurate positioning difficult. This means that it is very complicated and hard to have a perfect positioning of the implants, both in terms of position and axial direction. Such difference between theoretical and physical position of the implants affects the complexity of the framework and also the artificial tooth/teeth to be modelled on and supported by the framework.

The framework is mounted to the implants by e.g. screwing. This means that the framework and the at least one artificial tooth must be provided with through channels adapted to receive and guide such screws. Such through channels are in prior art formed by e.g. drilling.

The framework and the artificial tooth is modelled based on i.a. an impression, known as a master model, representing the position and the axial direction of the implants. This means that although the intention when deciding the position of the implant was to position the inlet of the through channel on an easy accessable position on the artificial tooth to be modelled on the framwork, the slightest angular misalignement of the implant results in an offset of the inlet adapted to receive a screw. Such offset can result in the inlet being positioned in a technically or aestethically difficult position such as on a buccal surface, close to, partly or in the gingiva, or in the gap intermediate two teeth. This can cause problems, not only to the dental technician who will design the superstructure or to the dentist who will mount and later maintain the superstructure, but also to the patient in terms of low strength artificial teeth, aestethical problems or difficulties in using implant floss. Additionally, when a maintenance is required, it is hard to identify the inlet since this after completed mounting is covered by a sealing, which sealing together with the artificial tooth as such is subjected to wear and discoloration.

There are also other aspects to consider, such as production time and production costs. The framework is made of a biocompatible material such as Titanium, being very expensive. There is thus a constant striving to reduce material consumption, including the amount of material to machine. It is also a matter of comfort to the patient, requiring the superstruture to be a low weight structure, but yet with high strength.

WO2008/024062 discloses a dental superstructure and a method to manufacture the same. The superstructure is provided with a through channel adapted to receive a connecting means. The channel is drilled from two sides, resulting in a channel having two straight portions meeting at an angle. An edge is formed at the angle causing problems when inserting and operating a connecting means. Although this piece of prior art relates to the thinking of allowing a certain redirection of the through channel in view of the implant, the limitaitions are strict and only minor adaptions are allowed.

WO 2006/079188 discloses a method of using selective laser powder processing technique for the production of a dental superstructure and framework. The method involves the step of creating a model of the framework to produce, digitising this and creating a mathematical model of the same. Based on this the framework is built up, layer by layer, using powder and selective laser treatment. Although the time and material consumtion can be greatly reduced, the flexibility in terms of mounting of the superstructure is still very limited. Also, the problem of positioning the inlet adapted to receive a connecting means still remains unsolved.

Thus, a general problem with prior art solutions relating to production of a dental framework is the limitation regarding the possibility to adapt the design and the production of the framework to factors such as physical position and axial direction of implants, physical strength and maintenance of the superstructure.

### Summary of the invention

Following this, one object of the invention is to provide a production method which increases the flexibility regarding adaption of the framework to the physical position and axial direction of the implants.

Another object is to allow increased flexibility while still allowing a structural strength to the framework and the at least one artificial tooth to be supported thereby.

Yet another object is to provide a method to produce a framework that is fast and allows a high strength although a low material consumption.

Other objectives, features and advantages of the present invention will appear from the following detailed disclosure, from the attached claims as well as from the drawings.

According to a first aspect, the invention relates to a method for the production of a dental prosthetic framework with at least one through channel having an inlet portion and an outlet portion, comprising the steps of
determining the position of an inlet opening of said inlet portion, said inlet opening discharging on a surface corresponding to an occlusal surface, a lingual surface or a palatinal surface of an artificial tooth to be modelled on and supported by the framework,
determining the position of an outlet opening and the axial direction of said outlet portion, such that the outlet portion is capable of cooperating with an implant arranged in a jawbone of a patient,
determining, for said at least one through channel in the framework, a longitudinal extension between said inlet and outlet portions,
forming said framework by means of a layer wise production technique by selectively consolidating layers of a powder material on top of each other using thermal energy, whereby said at least one through channel is formed during said step of forming said framework.

The framework to be produced forms a skeleton on which a facade of at least one artificial tooth can be modeled. The facade, i.e. the white portion and the gingiva is modeled by applying a number of thin layers of facing material, such as porcelain or acrylics. These layers have a total thickness in the range of approximately 0.5-3 mm, whereby the position of the inlet opening in the framework easily can be identified and determined based on the portion of the framework that is intended to face and support an occlusal, a palatinal or a lingual surface of an artificial tooth to be modeled. Thus, the thickness of the facing material only has a minor, negligible effect to the position of the inlet opening.

By the inventive method, the framework is produced based on two decisive factors. Firstly, the position and the axial direction of the at least one implant arranged in the patient's jawbone. By position is meant a center point of its cross section or any other easily identifiable reference point. Secondly, the best suitable position for an inlet opening adapted to receive a connecting means to be used to mount the superstructure to the implant. Based on these two factors, the longitudinal extension of a through channel is determined. More precisely, the channel is arranged to extend in the available volume of the framework to be produced. The available volume, defined by the outer boundaries of the framework, is decided by a dental technician, taking into consideration the volume needed by the at least one artificial tooth later to be modeled and supported by the framework. This means that the channel can have a more or less arbitrary extension and cross section. Also, a channel can be formed where any deviation from a straight linear extension can be provided with a radius, allowing a very easy operation of a connecting means.

By the layer wise production technique any suitable form, cross section or longitudinal extension of the through channel can be produced. This gives a large freedom in positioning the inlet opening of the inlet portion where it provides best access to the dentist and best structural strength to the artificial tooth, such as on an occlusal surface, a palatinal surface or a lingual surface.

The inventive method provides good possibilities for a durable, aesthetically and ergonomically well fitted superstructure adapting to the actual jawbone structure, even if this should have been subjected to a severe bone resorbtion.

The layer wise production technique using selective consolidation of layers of a powder material one on top of the other, allows a very complex geometry to be formed, both in terms of internal structure with a network of a plurality of through channels and in terms of outer geometry. Also, the selective consolidation allows for different densities and different structural strength throughout one and the same framework. This allows for e.g. reduced production time, reduced material consumption, reduced weight and reduced cost. By consolidation is meant sintering, melting or cladding.

The method can comprise the additional steps of providing a physical three dimensional model of the dental prosthetic framework to be produced, or parts thereof, in which the position of the inlet opening is determined, scanning the physical three dimensional model or parts thereof to provide a first numerical model, and using said first numerical model as input in said layer wise production technique.

The three dimensional model of the framework, also known as a set-up, is regarded as a prototype from which the outer geometry of the framework is decided. Care can be taken to remove unnecessary material in order to reduce e.g. weight and material consumption. In the set-up, the position of the inlet opening is determined. The position is determined to be on a portion which later will be covered by a facing material and form an occlusal surface, a palatinal surface or a lingual surface of an artificial tooth. The position of the inlet opening can be physically modeled or only be marked as a reference point on the set-up.

It is to be understood that it in some cases can be sufficient to only model a part of the framework.

The first numerical model can be subjected to refining in a computer program, such as a CAD-system.

Alternatively, the method can comprise the additional steps of providing a physical three dimensional model of the dental prosthetic framework to be produced, or parts thereof, scanning the physical three dimensional model or parts thereof to generate a first numerical model, determining the position of said inlet opening in said first numerical model, and using said first numerical model as input in said layer wise production technique.

Accordingly, as an alternative to determining the position of the inlet opening in the set-up, the position can be determined directly in the first numerical model resulting from the scanning. In that case, the first numerical model is transferred to and refined in a computer program, such as a CAD-system, whereby the position of the inlet opening is determined and the opening and the inlet portion modeled. While doing this, additional refining of the numerical model can be made such as modeling or adaption of portions adjacent the outlet portion, modeling the inlet portion adjacent the inlet opening and modeling the longitudinal extension of the through channel extending from the inlet portion to the outlet portion.

The method can comprise the additional steps of providing a master model representing an impression of the patient's jawbone comprising at least one implant, and scanning said master model, whereby a second numerical model is generated comprising information regarding the position of the outlet opening and the axial direction of each outlet portion to be formed in said dental prosthetic framework.

The second numerical model can be used as input in said layer wise production technique, or as input in a numerically controlled machining system. The second numerical model can be subjected to refining by using a computer system such as a CAD-system. Further, the second numerical model can, fully or partly, be merged with said first numerical model in order to have one numerical model, an assembly, containing complete numerical information about the framework to be produced.

The method can comprise the step of machining the outlet portion formed in the dental prosthetic framework by said layer wise production technique to a geometry adapted to fit the implant arranged in the jawbone of the patient. The machining can e.g be made by a numerically controlled machining system, such as a CAM system, based on information from the second numerical model providing exact information about the position and axial extension of the outlet portion. This information can be combined with exact geometry of the one or several implants to which the framework is intended to fit.

The longitudinal extension between said inlet and outlet portions of said at least one through channel can be determined in said first numerical model. This is preferably made by using a computer aided design system, such as a CAD system.

The at least one through channel can have a longitudinal extension between said inlet and outlet portions extending in two or three dimensions in available volume of the framework.

Essential decisive factors are e.g. the position and axial extension of the outlet adapted to cooperate with the implant, the estimated position and availability of the occlusal, the palatinal or the lingual surface of the artificial tooth. The inlet opening should preferably to the greatest extent possible be positioned in the center of an occlusal, a palatinal or a lingual surface of the intended artificial tooth. Further, it should preferably to greatest extent possible extend trough the center of the artificial tooth in order to benefit from its strength. The position and axial direction of the outlet portion is determined by the position and axial extension of the implant. The longitudinal extension there between can be freely determined based on the available volume of the framework. This means that any extension is possible depending on the specific situation, such as a straight linear extension, two or more straight linear or non-linear portions meeting at an angle, two or more straight linear or non-linear portions meeting with a radius, and a longitudinal extension in two or three dimensions. Accordingly, the longitudinal extension can be given any arbitrary longitudinal extension deemed suitable for the specific situation. Each channel in the framework can have its unique extension.

It is to be understood that the number of through channels corresponds to the number of implants and that the positions and extensions of adjacent channels must be taken into consideration.

Said at least one through channel can have a non-uniform cross section along its longitudinal extension. This allows an enhanced accessibility for a connecting means and operation thereof.

The layer wise production technique can be a selective laser treatment, a selective electron beam treatment such as electron beam melting, or a printing technology and the layer wise production technique can provide a homogenous consolidation, a net-forming consolidation or a mixture of a homogenous and net-forming consolidation.

The layer wise selective treatment offers the advantage that a product having a very complex geometry, both internally and externally can be produced. Depending on surface quality requirements, no machining is necessary or it can be greatly reduced. Further, by the selective treatment, the degree of consolidation can be varied, leaving some areas partially consolidated, while other areas can be fully consolidated. By consolidation is meant sintering, melting or cladding.

This allows a variation of the structural strength of the final product. The selective treatment also allows a complex structure, such as a net-like structure, to be formed when the thermal energy in supplied in a certain pattern. Some areas, such as areas which later will be subjected to machining, can be subjected to a homogenous consolidation forming a solid structure, whereas other areas can be consolidated into a net-like structure.

The printing technology can be metal injection moulding (MIM) or ceramic injection moulding (CIM).

Generally, the energy content of an electron beam is higher than in a laser beam, whereby an electron beam treatment can offer a better and higher degree of consolidation, i.e. a higher structural strength and a lower production time.

The powder material can comprise a biocompatible material such as pure titanium, a titanium-alloy, a cobalt-chromium-alloy, a zirconium oxide alloy of titanium and zirconium, a mixture of polymer and ceramics, a mixture of polymer and titanium or a mixture of polymer and nano fibers. This is a non-exhaustive list of material and other materials known to the skilled person are possible.

According to another aspect, the invention relates to a dental prosthetic framework adapted to support at least one artificial tooth, said framework comprising at least one through channel adapted to receive a connecting means, said at least one through channel having an inlet portion and an outlet portion, the outlet portion being positioned and axially oriented to allow cooperation between the prosthetic framework and at least one implant arranged in a jawbone of a patient. The framework is characterized in that the position of the inlet portion is determined based on information relating to the position and geometry of at least one artificial tooth to be modeled on and supported by the prosthetic framework, whereby the position of an inlet opening of said inlet portion is determined to discharge on a surface adapted to correspond to and face to an occlusal surface, a lingual surface or a palatinal surface of said at least one artificial tooth.

The inventive framework correspond in all relevants parts to the framework resulting from the above discussed inventive method, whereby reference is made to that discussion.

Said at least one through channel can have a longitudinal extension between said inlet and outlet portions extending in two or three dimensions in available volume of the framework.

Said at least one through channel can have a non-uniform cross-section along its longitudinal extension. This allows for a facilitated insertion and operation of a connection element, such as a screw or the like.

Portions adjacent a through channel or portions adjacent an outlet portion and/or an inlet portion can have a solid structure, whereas other portions can have a net-forming structure. This allows for an optimized structural strength and production time.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements.
Fig 1 is a highly schematic view of a superstructure comprising a prior art framework.
Fig 2a is a highly schematic view of a superstructure comprising a framework according to the invention.
Fig 2b discloses highly schematically a sideview of the superstructure of Fig 2a.
Fig 3 discloses a front view of another embodiment of the inventive framework.
Fig 4 discloses an embodiment of the network with sections subjected to different types of consolidation.
Fig 5 is a flow chart disclosing the inventive method.

### Detailed description of preferred embodiments

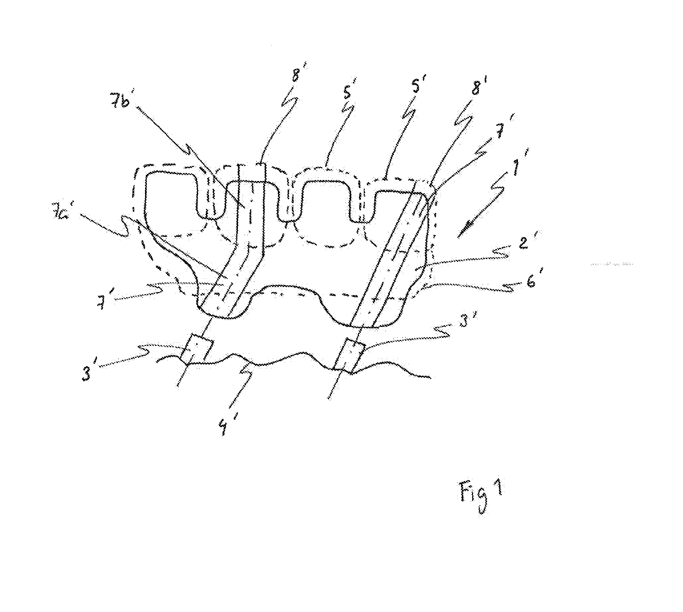

Fig 1 is a highly schematic view of a superstructure 1' comprising a prior art framework 2' adjacent two implants 3' mounted in a jawbone 4'. The disclosed framework, which can be e.g. casted or machined, supports artificial teeth 5' and an artificial gingiva 6', all drafted with broken lines.

The connection of the superstructure 1' to the implants 3' is made by connecting means in the form of screws or the like (not disclosed) adapted to be received and mounted in through channels 7', each extending in the framework and exiting on an artificial tooth 5'. The through channels are sealed after mounting of the superstructure to the implants.

As schematically illustrated in Fig 1, the through channels 7' according to prior art can have a straight linear extension corresponding to the axial direction of the implants or be drilled from two sides, whereby the through channel has two straight linear portions 7a', 7b' meeting at an angle. This means that the position of the inlet opening 8' adapted for insertion of the connection means is not always positioned on the optimal surface of the artificial tooth. Instead, it is a direct result of the axial direction of the implant. In the worst case scenario, it might not even be on an artificial tooth but rather in the artificial gingiva.

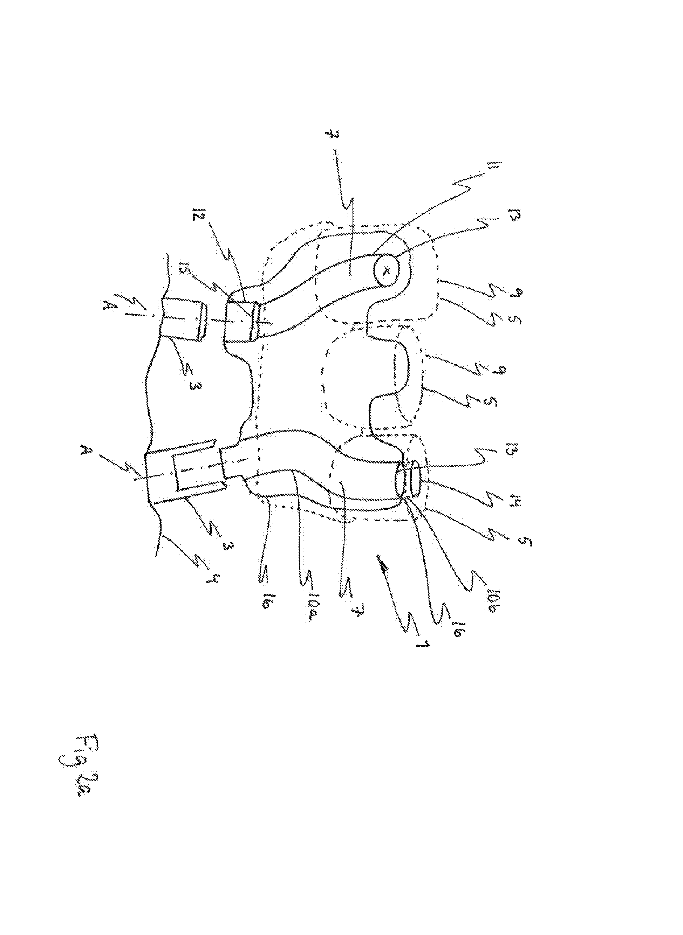

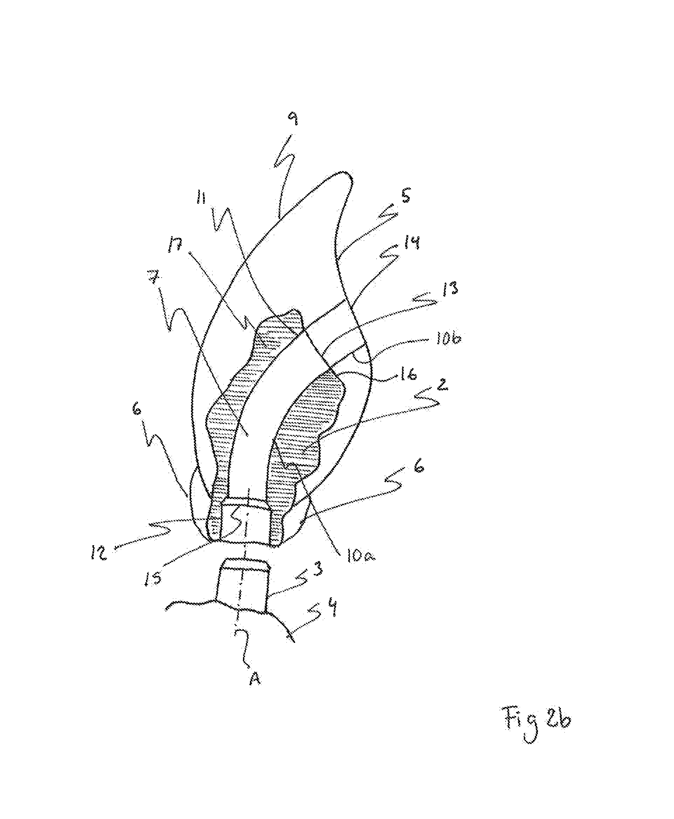

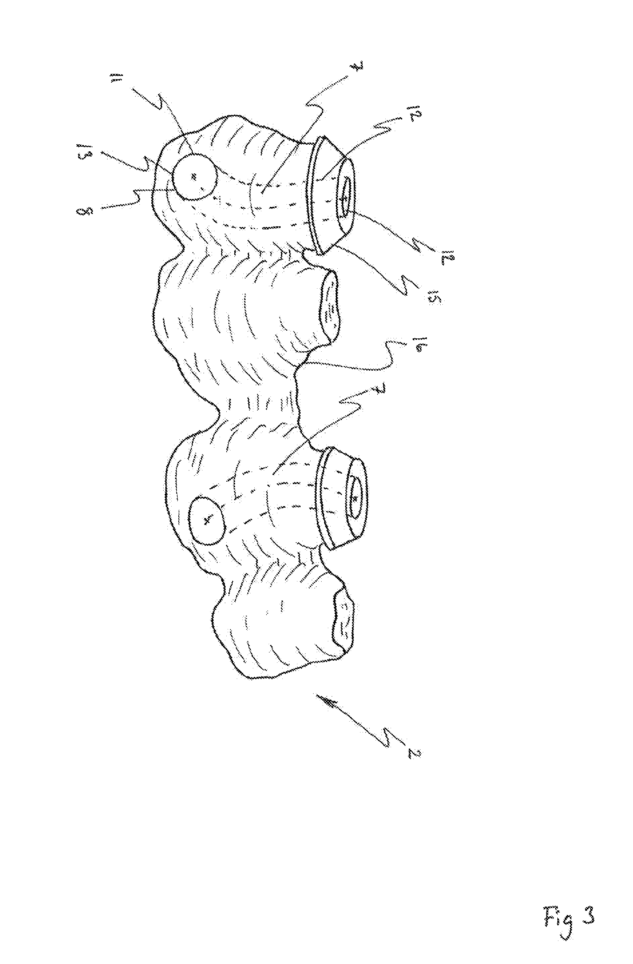

Now turning to Figs 2a and 2b, a superstructure 1 according to the invention is illustrated highly schematically as seen from two sides. Fig 2b discloses a schematic cross section of the left side tooth 5. Another embodiment of a framework 2 as such is disclosed in Fig 3.

The superstructure 1 comprises a framework 2 supporting a number of artificial teeth 5 including an artificial gingiva 6 modelled on and supported by the framework. The framework 2 can be equalled with a skeleton on which the artificial tooth structure and an artificial gingiva is modelled by adding at least one layer, normally several layers of facing material 9 of different types, such as acrylics, composite or porcelain. The total thickness of the facing material generally amounts to 0.5-3 mm.

The framework preferably has an outer geometry which is large enough to allow support of the least one artificial tooth 5 and to allow a firm mounting of the superstructure to the implants. Still, it should contain as little material as possible to reduce weight and volume and thereby not affect the comfort to the patient.

The framework 2 is preferably made of a biocompatible material, such as pure titanium, a titanium-alloy, a cobalt-chromium-alloy and zirconium oxide alloy of titanium and zirconium. It can also be a mixture of polymer and ceramics, a mixture of polymer and titanium or a mixture of polymer and nano fibers. It is to be understood that also other materials can be used.

The framework 2 has a number of through channels 7 corresponding to the number of implants mounted in the jawbone. Each through channel 7 extends through the framework 2 and through one or several teeth 5 modelled on said framework. Thus, a first section 10a of the through channel 7 runs through the framework, whereas a second section 10b runs through at least one artificial tooth modelled on the framework. The two sections 10a, 10b do together form the continuous through channel 7. Further, each through channel 7 of the framework 2 has an inlet portion 11 and an outlet portion 12. The through channel 7 with its inlet and outlet portions 11, 12 has a diameter or cross section allowing insertion, guiding and operation of a connecting means (not disclosed) intended for the implant. The connecting means can be a screw or the like. The through channel can have a longitudinal extension between said inlet and outlet portions extending in two or three dimensions in available volume of the framework. Also, it can have a cross section varying along its extension. Any deviation from a straight linear extension can be provided with a radius,

The longitudinal extension of the through channel 7 between the inlet portion 11 and the outlet portion 12 is determined based on parameters such as e.g. position and axial direction A of the implant 3 in the jawbone 4, tooth configuration, available material volume in the framework and structural strength in the framework and in the artificial tooth. These are all parameters determined by the dentist and the dental technician based on their skill.

The inlet portion 11 has an inlet opening 13 positioned at a portion of the framework intended to support an occlusal, a palatinal or a lingual surface of the artificial tooth 5 to be modelled on the framework. It is to be understood that the through channel will continue its extension through such tooth. However, due to the limited thickness of the facing material 9, the position of the inlet opening 13 in the framework can easily be translated to the expected surface 14 of the artificial tooth 5 without affecting the intended position on the exterior surface 16 of the framework 2.

It is preferred for the inlet opening 13 to discharge on an occlusal surface, a palatinal surface or a lingual surface. It is to be understood that the inlet opening can be positioned on the closest available tooth but also, if deemed more suitable, on an adjacent tooth. The inlet portion as such has an axial extension determined by the longitudinal extension of the through channel to be formed.

The outlet portion 12 has a position and an axial direction adapted to fit a specific implant 3 in the jawbone. Further, the outlet portion 12 forms on its interior (left side in Fig 2a) or exterior boundary surface (right side in Fig 2a) a seating 15a with a geometry adapted to fit the implant with high accuracy. The position and axial direction is determined by the position and axial direction of the corresponding implant in the jawbone, while the geometry is determined by the type of implant. At today's date there are more than 2000 different implants available on the market but no general standardization. One and the same framework can be combined with different implants.

The outlet portions 12 are formed in a ridge like section 16 in the framework intended to face the jawbone.

The framework 2 is produced by using a layer wise production technique wherein layers 17 of a powder material are arranged and selectively consolidated on top of each other by using thermal energy. The technique can be a laser selective laser treatment or a selective electron beam treatment such as electron beam melting. Also, a printing technology can be used such as metal injection moulding (MIM) or ceramic injection moulding (CIM), Generally, the energy content of an electron beam is higher than in a laser beam, whereby an electron beam treatment can offer a better and higher degree of consolidation, i.e. a higher structural strength and a lower production time.

The layer wise production technique is a numerically controlled process based on a numerical model of the framework to be formed. The framework is built up by consecutively arranging or printing layers 17 of a powder material and supplying thermal energy in order to consolidate the layer/layers. By the numerical control, the energy can be supplied with high accuracy, both in terms of energy content and position.

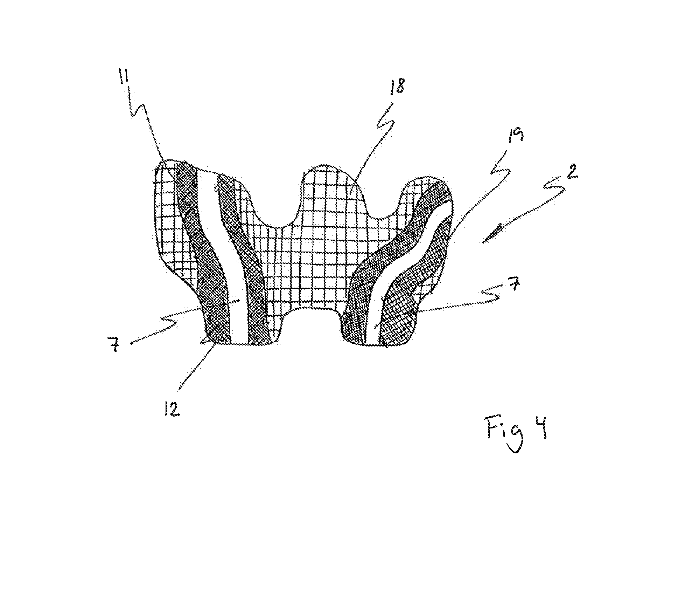

The layer wise selective treatment offers the advantage that a framework having a very complex geometry, both internally and externally can be produced. The degree of consolidation can be varied with some portions partially consolidated and other fully consolidated. It also allows a complex structure e.g. applying energy in a certain pattern whereby a net-like structure can be formed. The consolidation can result in a solid structure 19, a net-forming structure 18 or a mixture of a solid and net-forming structure. By way of example, portions adjacent the through channels 7 or portions adjacent the outlet portion 12 and/or the inlet portions 11 can have a solid structure whereas other portions can have a net-forming structure. Such embodiment is schematically illustrated in Fig. 4.

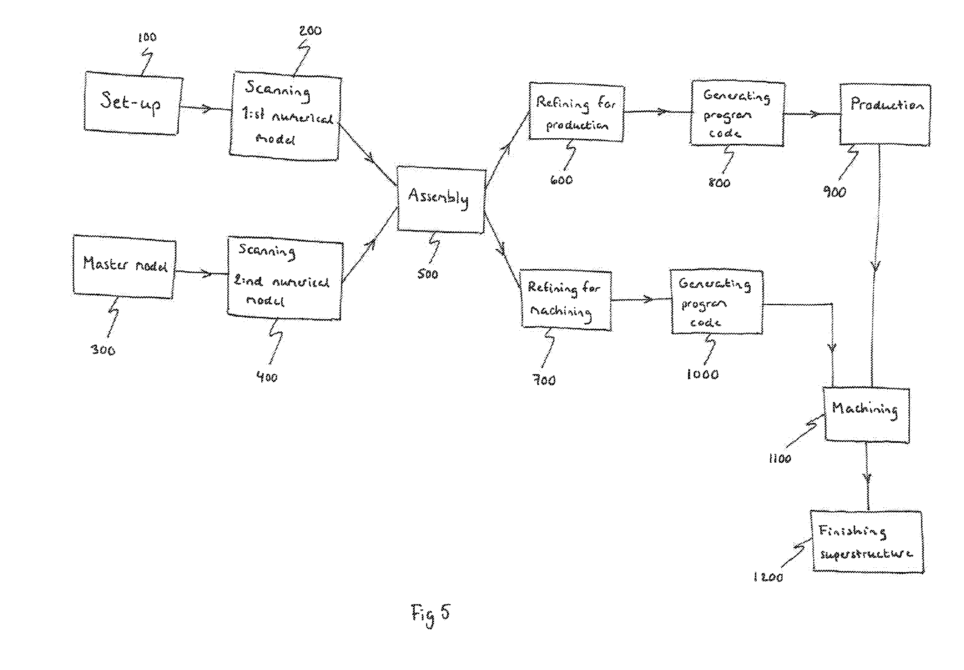

In the following a method for the production of a dental prosthetic framework according to one embodiment of the invention will be described with reference to the flow chart of Fig 5. The description to follow is based on the understanding that more than one, and preferably at least two, implants have been arranged in the patient's jawbone.

A set-up, i.e. a physical three dimensional model of the framework to be produced, or parts thereof, is produced 100 by a dental technician. The set-up, normally made in acrylics or wax, defines the outer geometry and boundaries of the framework. Care can be taken to remove unnecessary material in order to reduce e.g. weight and material consumption.

In the set-up, the dental technician can propose suitable positions of the inlet openings, based on artificial teeth later to be modeled and supported on the framework. The suggested position can be marked as a reference point. The position is determined to be on a portion of the framework which is to be covered by a number of layers of facing material and thereby support an occlusal surface, a palatinal surface or a lingual surface of an artificial tooth.

It is to be understood that in some cases it can be sufficient to only model a part of the framework to be produced.

The set-up is scanned 200 in order to generate a first numerical model. This comprises numerical information about the outer geometry of the framework, including the suggested position of each inlet opening. The scanning, not further described, can be made by a method and device well known to the skilled man.

In order to get information about the positions of the implants and their axial directions, a master model, i.e. a three dimensional model, is produced 300 based on an impression of the jawbone comprising at least one implant. The master model comprises a support and a number of replicas corresponding to the number of implants, each replica having the exact position and exact axial direction as its corresponding implant in the jawbone. The manufacturing of the master model is well known in the art and is not further discussed.

The master model is scanned 400 in order to generate a second numerical model comprising numerical information about the position and axial direction of each implant.

As a next step, the first and second numerical models are merged into one numerical model, in the following referred to as an assembly 500. The assembly comprises all numerical information comprised in the first and the second numerical models. This can by way of example be made by using a computer system such as a CAD system.

The assembly is refined 600, 700 in order to make sure that it comprises all relevant information required in the future work. All irrelevant numerical information is hidden or removed. Exactly how this is made depends on the computer system used. Examples of irrelevant information relating to the master model relates to the support and the geometry of the replicas. Information to be maintained from the master model is that representing the actual position and axial direction of the implants, and especially information regarding the top surface plane of each replica, i.e each implant. Correspondingly, any irrelevant numerical information from the first numerical model representing the set-up is hidden.

The through channels are modeled based on the information relating to the position and axial direction of the implants and the proposed reference points for the inlet openings of the inlet portions. This can be made by modeling the through cannels with their inlet and outlet portions in the CAD model, based on known geometrical information of the implants used and their connecting means, or by merging the same information from a digital library of pre-drafted geometries corresponding to the used implants and their connecting means. By way of example such library can contain a number of pre-drafted geometries representing implants and connecting means available on the market, where the pre-drafted geometries have such size and cross-sectional geometry that the connecting means can be received and operated inside the through channels and where the outlet portions have a geometry forming a seating fitting not only the implant as such but also the connecting means to be used.

As one step in the refining, the proposed positions of the inlet opening are evaluated in view of parameters such as the longitudinal extension of the through channels in the available volume in the framework to be produced, the expected geometry of the at least one artificial tooth to be modeled and supported thereby and the expected position of the occlusal, palatinal or lingual surface of such artificial tooth. If decided that the position should be changed to provide a more favorable position, this is made digitally in the assembly. Aspects to consider is structural strength in the framework to be produced and in the at least one artificial tooth.. Another aspect to consider is availability of the inlet openings to the dentist.

Another step in the refining is adding extra material volume in areas later to be subjected to machining. This is especially the surfaces of the outlet portion adapted to form a seating fitting snuggly to an implant and adapted to engage a connecting means.

Once the complete design of the framework is determined in the assembly, the resulting numerical model is converted into a program code 800 suitable for the layer wise production technique to be used.

Depending on the specific system used, a number of features might be available for determination and inclusion in the program code to be generated. Examples of such features are number of layers, orientation of the framework in the space to allow the layer wise production, number of supports for the framework to be produced and number of frameworks to be produced at one and the same time.

Additional parameters to decide are process parameters, such as energy content, type of powder material, temperature, any preheating of platforms supporting the framework while being formed, structural features such as which areas should have a solid structure and which areas, if any, should have a net-like structure, and type and degree of consolidation i.e sintering, melting or cladding.

It is to be understood that these are only examples of features available depending on type of system used for the layer wise production. Depending on which system used, this can be made in one and the same computer system, or by using several computer systems. The result is a program code for the layer wise production equipment.

The program code is transferred to the layer wise production whereby the framework is produced 900. It is to be understood that several frameworks, each having a unique design, can be produced at the same time.

The resulting frame work has, depending on a number of parameters, such as number of layers, particle size and energy supply, a fairly rough surface. At least surfaces of the outlet portions can be machined to provide a seating fitting snuggly to the implant and its connecting means. To perform such machining, the framework can be transferred to a numerically controlled machine.

The previously described second numerical model representing the master model can be used as input when generating the necessary program code 1000 for the numerically controlled machine. The relevant information to be used is information representing the position and axial direction of the implants and the position of the top surface plane of each replica, i.e each implant. Again, the geometries to be machined can be modeled based on known geometrical information of the implants used and their connecting means, or by merging the same information from a digital library comprising pre-drafted geometries. Such digital library can also include program code for machining of such geometries.

The program code is transferred to the numerical controlled machine to be used whereby the framework is subjected to machining 1100.

The resulting framework is ready to be used as a skeleton when finishing 1200 the superstructure, i.e providing it with at least one artificial tooth and an artificial gingiva. The resulting supertsructure is to be mounted to the patient's jawbone by using connecting means inserted in the through channels via their inlet openings. After mounting, the openings are covered and sealed by a sealing.

The invention has mainly been described with reference to a few embodiments. However, as is readily appreciated by a person skilled in the art, other embodiments than the ones disclosed above are equally possible within the scope of the invention, as defined by the appended patent claims.

It is to be understood that the numerical information required for the inventive method and required to produce the inventive framework can be gathered and treated in a number of ways all falling within the scope of the invention. This also applies to the production of the set-up and the master model.

The step of providing a physical set-up model can be replaced by providing digital model only. Such digital model of the set-up is created based on relevant information gathered from the master model.

As alternative to a master model, the corresponding numerical information about the implants can be achieved by CT scanning the patient's oral cavity with implants.

## Claims

1. A method for the production of a dental prosthetic framework (2) with at least one through channel (7) having an inlet portion (11) and an outlet portion (12), comprising the steps of
determining the position of an inlet opening (13) of said inlet portion, said inlet opening discharging on a surface corresponding to an occlusal surface, a lingual surface or a palatinal surface of an artificial tooth (5) to be modelled on and supported by the framework,
determining the position of an outlet opening and the axial direction of said outlet portion (12), such that the outlet portion is capable of cooperating with an implant (3) arranged in a jawbone (4) of a patient,
determining, for said at least one through channel in the framework, a longitudinal extension between said inlet and outlet portions,
forming said framework by means of a layer wise production technique (900) by selectively consolidating layers of a powder material on top of each other using thermal energy, whereby said at least one through channel is formed during said step of forming said framework.

2. The method for the production of a dental prosthetic framework according to claim 1, comprising the additional steps of
providing (100) a physical three dimensional model of the dental prosthetic framework to be produced, or parts thereof, in which the position of the inlet opening is determined,
scanning (200) the physical three dimensional model or parts thereof to provide a first numerical model, and
using said first numerical model as input in said layer wise production technique (900).

3. The method for the production of a dental prosthetic framework according to claim 1, comprising the additional steps of
providing (100) a physical three dimensional model of the dental prosthetic framework to be produced, or parts thereof,
scanning (200) the physical three dimensional model or parts thereof to generate a first numerical model,
determining the position of said inlet opening in said first numerical model, and
using said first numerical model as input in said layer wise production technique (900).

4. The method for the production of a dental prosthetic framework according to any of the preceding claims, comprising the additional steps of
providing a master model (300) representing an impression of the patient's jawbone comprising at least one implant, and
scanning (400) said master model, whereby a second numerical model is generated comprising information regarding the position of the outlet opening and the axial direction of each outlet portion to be formed in said dental prosthetic framework.

5. The method for the production of dental prosthetic framework according to claim 4, wherein the second numerical model is used as input in said layer wise production technique (900) and/or as input in a numerically controlled machining system (1100).

6. The method for the production of a dental prosthetic framework according to any of the preceding claims, further comprising the step of
machining (1100) the outlet portion formed in the dental prosthetic framework by said layer wise production technique (900) to a geometry adapted to fit the implant arranged in the jawbone of the patient.

7. The method for the production of a dental prosthetic framework according to claim 2 or 3, wherein the longitudinal extension between said inlet (11) and outlet portions (12) of said at least one through channel (7) is determined in said first numerical model.

8. The method for the production of a dental prosthetic framework according to any of the preceding claims, wherein said at least one through channel (7) has a longitudinal extension between said inlet (11) and outlet portions (12) extending in two or three dimensions in available volume of the framework.

9. The method for the production of a dental prosthetic framework according to any of the preceding claims, wherein said at least one through channel (7) along its longitudinal extension has a non-uniform cross section.

10. The method for the production of a dental prosthetic framework according to any of the preceding claims, wherein
the layer wise production technique (900) is a laser selective laser treatment, a selective electron beam treatment such as electron beam melting, or a printing technology, and wherein
the layer wise production technique provides a homogenous consolidation, a net-forming consolidation or a mixture of a homogenous and net-forming consolidation.

11. The method for the production of a dental prosthetic framework according to any of the preceding claims, wherein the powder material comprises a biocompatible material such as pure titanium, a titanium-alloy, a cobalt-chromium-alloy, a zirconium oxide alloy of titanium and zirconium a mixture of polymer and ceramics, a mixture of polymer and titanium or a mixture of polymer and nano fibers.

12. A dental prosthetic framework (2) adapted to support at least one artificial tooth, said framework comprising
at least one through channel (7) adapted to receive a connecting means, said at least one through channel having an inlet portion (11) and an outlet portion (12), the outlet portion being positioned and axially oriented to allow cooperation between the prosthetic framework (2) and at least one implant (3) arranged in a jawbone of a patient, **characterized in**
**that** the position of the inlet portion (11) is determined based on information relating to the position and geometry of at least one artificial tooth (5) to be modeled on and supported by the prosthetic framework, whereby
the position of an inlet opening (13) of said inlet portion (11) is determined to discharge on a surface adapted to correspond to and face to an occlusal surface, a lingual surface or a palatinal surface of said at least one artificial tooth.

13. A dental prosthetic framework according to claim 12, wherein said at least one through channel (7) has a longitudinal extension between said inlet (11) and outlet portions (12) extending in two or three dimensions in available volume of the framework.

14. A dental prosthetic framework according to claim 12 or 13, wherein said at least one through channel (7) along its longitudinal extension has a non-uniform cross section.

15. A dental prosthetic framework according to any of claims 12-14,
wherein portions adjacent a through channel (7) or portions adjacent an outlet portion (11) and/or an inlet portion (12) have a homogenous structure, whereas other portions have a net-forming structure.
